# FASCICULE DE BREVET EUROPEEN

(11) **EP 0 436 748 B1**
(45) Date de publication et mention de la délivrance du brevet: **06.04.1994**
(21) Numéro de dépôt: 89403451.1
(22) Date de dépôt: 13.12.1989
(51) Int. Cl.: A01G 5/02, B65D 85/50

(54) **Procédé de mise en grappe de bulbes de plantes, moyens en vue de la mise en oeuvre de ce procédé**
Verfahren um Pflanzenzwiebeln zusammenzubinden, Vorrichtung um das Verfahren auszuführen
Method for stringing plant bulbs, apparatus for executing this method

(43) Date de publication de la demande: 17.07.1991
(73) Titulaire: Gieza, Paul, F-62000 Arras (FR)
(72) Inventeur: Gieza, Paul, F-62000 Arras (FR)
(74) Mandataire: Ecrepont, Robert

(56) Documents cités:
- DE-C- 361 808
- DE-U- 8 509 850
- US-A- 4 277 885

## Description

L'invention se rapporte à un procédé de mise en grappe de bulbes de plantes notamment potagères telles les oignons, les aulx, les échalottes ainsi qu'aux moyens en vue de la mise en oeuvre de ce procédé.

Pour la présentation des bulbes de plantes, il est connu de les regrouper en grappes constituées chacune d'une simple botte dans laquelle les bulbes sont sensiblement tous placés au même niveau et dont les tiges sont toutes rassemblées et maintenues ainsi assemblées :
- soit par enroulement et nouage en un point donné de leur longueur d'un lien rapporté, lequel mode de maintien concentre toutefois en un point les contraintes et favorise la rupture des tiges et donc la dislocation de la botte,
- soit en faisant un noeud avec le faisceau de tiges lui-même ce qui nécessite des tiges trés longues et suffisamment résistantes.

Quoiqu'il en soit, cette présentation en botte s'avère peu favorable à un contrôle de qualité des divers bulbes dont nombre d'entre eux se trouvent dissimulés derrière les bulbes situés à la périphérie de la botte.

On connaît également une autre présentation des bulbes, selon laquelle les dits bulbes sont disposés en épi et maintenus dans cette disposition par tressage de leurs tiges.

Si cette disposition assure que la qualité de tous les bulbes puisse être aisément observée, elle exige que les tiges de ces bulbes aient une longueur d'au moins quinze à vingt centimètres ce qui, compte tenu de leur fragilité, limite les possibilités d'emploi de ce procédé à seulement une partie des bulbes récoltés.

De plus, compte tenu en partie de cette fragilité des tiges, le tressage des dites tiges demande une trés grande dextérité.

Il en résulte le recours à une main d'oeuvre trés spécialisée rare et onéreuse et une production limitée, rarement de plus de quinze tresses environ par heure et par personne.

Pour remédier à ces inconvénients, il est connu de placer en vrac les bulbes dans des filets mais à l'exemple des bottes, cela ne permet pas d'apprécier la qualité de tous les bulbes.

Un des résultats que l'invention vise à obtenir est un procédé de mise en grappe de bulbes qui, tout en permettant un rangement en épi des bulbes, se suffit de tiges trés courtes et notamment de seulement trois ou quatre centimètres de longueur.

Un des autres résultats que l'invention vise à obtenir est un tel procédé qui tout en permettant de maintenir les bulbes disposés en épi n'exige pas de la main d'oeuvre une dextérité exceptionnelle et ne freine pas la production.

A cet effet, l'invention a pour objet un procédé de mise en grappe de bulbes de plantes notamment potagères telles les oignons , les aulx, les échalottes, dans laquelle grappe, les bulbes sont disposés d'une certaine manière et selon lequel on se munit d'un support longiligne contre lequel on applique, au moins une à la fois, les tiges des bulbes à assembler avant qu'autour de l'ensemble que forme ce support et au moins une tige, sur une certaine longueur de chaque tige, on enroule sensiblement hélicoïdalement au moins un lien,
ce procédé étant exploité en vue de la réalisation de grappe dite en épi c'est à dire dans laquelle des groupes d'au moins un bulbe sont alignés en un à trois rangs parallèles entre eux au long duquel épi, les bulbes d'un même rang sont espacés selon un pas sensiblement régulier avec leurs tiges toutes tournées vers une même extrémité de l'épi et situées sensiblement dans le plan de symétrie de la grappe, au long duquel épi, les bulbes sont déposés,
ce procédé étant **caractérisé** en ce que :
- contre la base du support longiligne, on applique la base de la tige d'au moins un bulbe en tournant l'extrémité de cette tige vers l'autre extrémité du support,
- autour de l'ensemble que forment le support et la base d'au moins une tige, on enroule en hélice au moins le lien et sur la longueur d'un pas égal à au moins une longueur de tige comparable à la grosseur du bulbe,
- contre la partie revêtue de cet enroulement, on positionne au moins un autre bulbe dont on appuie la base de la tige sur la partie du support suivant immédiatement la partie revêtue du dit enroulement avant, autour du nouvel ensemble comprenant le support longiligne, la base de l'autre bulbe et la surlongueur éventuelle des bulbes précédents, de poursuivre l'enroulement en hélice d'au moins un lien et ainsi de suite jusqu'à l'extrémité de l'épi où on fixe le lien de manière à éviter son déroulement accidentel, le mouvement de translation nécessaire à l'obtenation de l'enroulement en hélice est réalisé par une translation du support longiligne.

Ces moyens perfectionnent un dispositif de ligaturage dont la structure s'apparente à celle décrite dans le document DE-U-8509850, voire dans le document US-A-4.227.850, lequel dispositif comprend notamment :
- une table sensiblement horizontale,
- un moyen de déplacement en translation de l'épi en formation dans le plan de la table, au long de l'axe longitudinal de la dite table, lequel moyen consiste en un coulisseau guidé en translation le long de l'axe longitudinal et portant au dessus de la table une griffe apte à saisir au moins un bulbe et à le faire avancer malgré une traction exercée sur sa tige,
- au moins un moyen de commande par un moyen de liaison du moyen de déplacement en translation de l'épi,
- à la partie antérieure de la table, un support d'au moins un distributeur du lien,
- un moyen de guidage de ce support de distributeur en rotation sensiblement autour de l'axe longitudinal de la table,
- un moyen de commande en rotation de ce support de distributeur,
- un moyen de synchronisation des actions du moyen de commande en rotation du support de distributeur et du moyen de commande en translation de l'épi en formation afin que le lien soit déposé au moins sensiblement en hélice.

Précisément, l'invention perfectionne les moyens qui, dans ces dispositifs connus, permettent d'assurer les déplacements synchronisés de la bobine de lien autour de l'article à ligaturer et de la griffe qui doit déplacer cet article pendant le ligaturage.

Dans le document DE-U-8509850 ainsi que dans le document US-A-4.227.850, les moyens mis en oeuvre sont mécaniquement complexes et donc onéreux à réaliser et à entretenir.

Un autre résultat que l'invention vise à obtenir est un dispositif du type précité qui remédie à ces inconvénients.

Est encore un résultat que l'invention vise à obtenir un dispositif qui, tout en étant robuste, permet de replacer rapidement la griffe à son point de départ en vue de la ligature d'un nouvel article tel un nouvel épi.

L'invention sera bien comprise à l'aide de la description ci-aprés faite à titre d'exemple non limitatif en regard du dessin ci-annexé qui représente schématiquement :

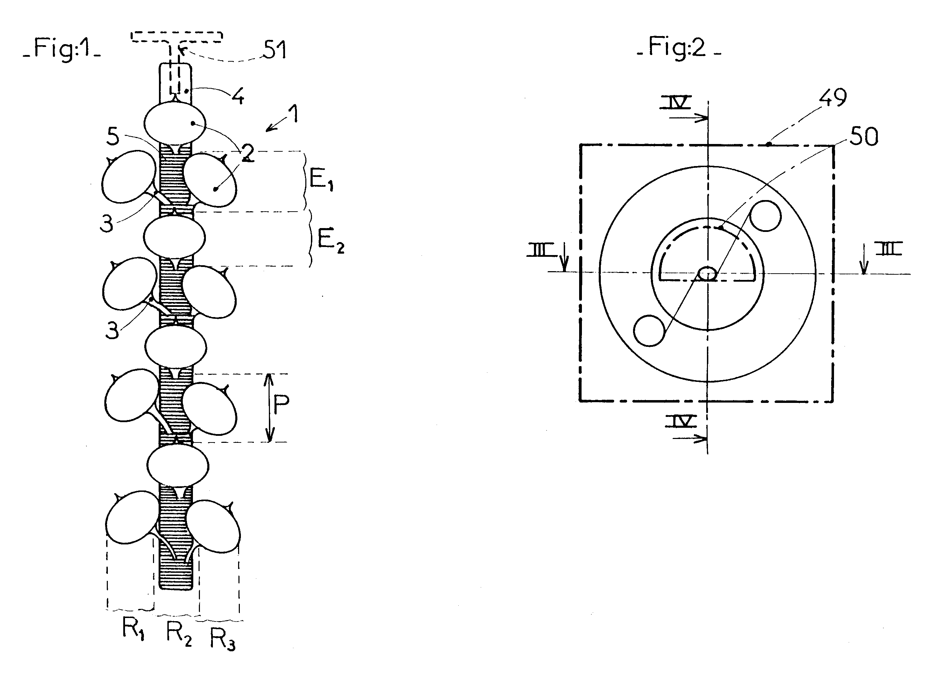

- figure 1 : une grappe de bulbes assemblés selon le procédé de l'invention,
- figure 2 : vue de face, un des moyens de mise en oeuvre du procédé,

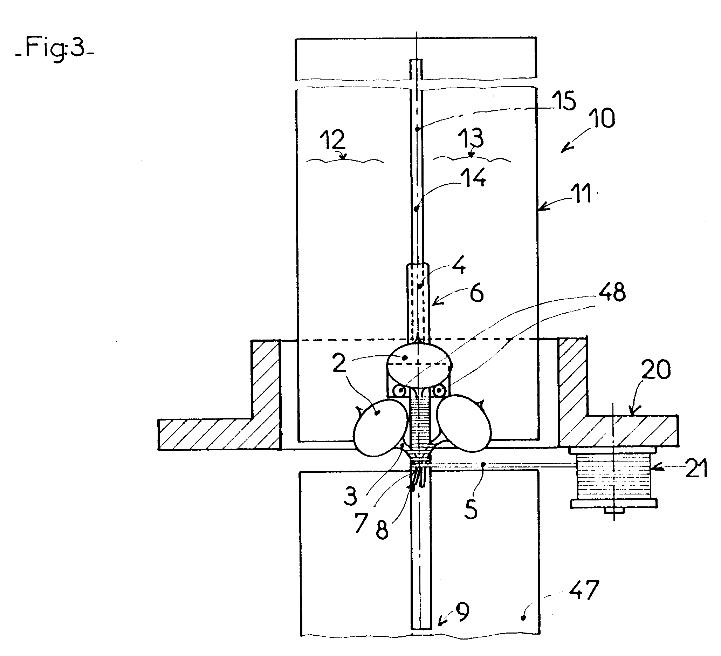

- figure 3 : une coupe selon III-III de la figure 2,

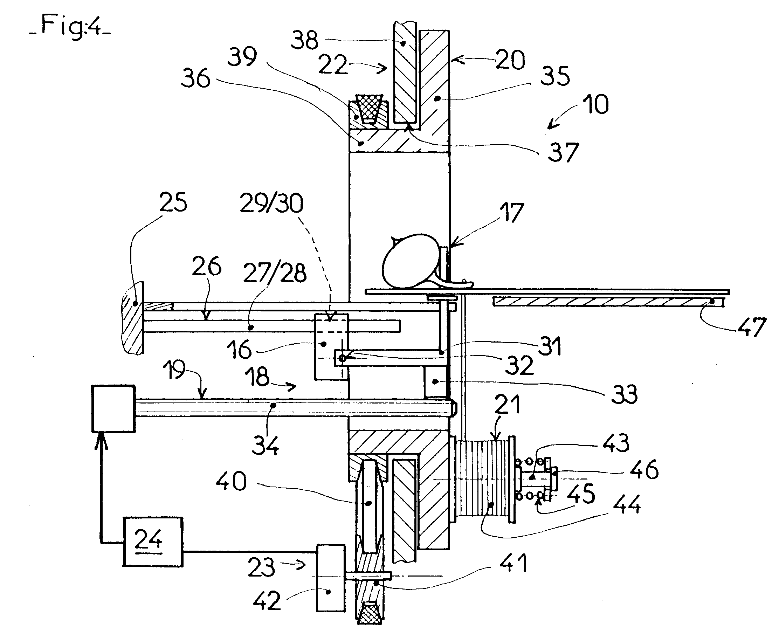

- figure 4 : une coupe selon IV-IV de la figure 2.

En se reportant au dessin, on voit que, dans la grappe 1, les bulbes 2 sont disposés d'une certaine manière.

Afin de maintenir les bulbes 2 dans cette disposition, au lieu de tresser les tiges 3 ou de faire un noeud avec les dites tiges ou encore de les lier en un point donné de leur longueur par un enroulement et nouage d'un lien rapporté, on se munit d'un support longiligne 4 contre lequel on applique, au moins une à la fois, les tiges 3 des bulbes 2 à assembler avant qu'autour de l'ensemble E que forme ce support 4 et au moins une tige 3, sur une certaine longueur de chaque tige, on enroule sensiblement hélicoïdalement au moins un lien 5.

De préférence, pour chaque bulbe 2, l'enroulement s'opère au moins sur une longueur de tige 3 comparable à la grosseur du bulbe 2.

Par exemple, le support est formé à partir d'une bande de carton de largeur double de celle du support 4 et qui, sur toute sa longueur, est pliée en deux.

Dans la grappe 1 , la disposition préférée est une disposition dite en épi selon laquelle des groupes d'au moins un bulbe sont alignés en un à trois rangs R1, R2, R3 parallèles entre eux au long duquel épi 1, les bulbes sont espacés selon un pas P sensiblement régulier avec leurs tiges 3 toutes tournées vers une même extrémité de l'épi 1 et situées sensiblement dans le plan de symétrie de la grappe.

L'épi est réalisé progressivement sur le support longiligne 4 depuis une de ses extrémités 6 dite "base".

Au long de l'épi, les bulbes peuvent être alternativement déposés d'un côté et de l'autre du plan de symétrie et/ou alternativement selon deux nombres différents.

Pour parvenir à une telle disposition,
- contre la base 6 du support longiligne 4, on applique la base 7 de la tige 3 d'au moins un bulbe 2 en tournant l'extrémité 8 de cette tige vers l'autre extrémité 9 du support 4 ,
- autour de l'ensemble E1 que forme le support 4 et la base 7 d'au moins une tige 3, on enroule en hélice au moins un lien 5 en procédant comme indiqué plus haut et sur la longueur du pas précisée plus haut,
- contre la partie revêtue de cet enroulement, on positionne au moins un autre bulbe dont on appuie la base de la tige sur la partie du support suivant immédiatement la partie revêtue du dit enroulement avant, autour du nouvel ensemble E2 comprenant le support longiligne, la base de la tige de l'autre bulbe et la surlongueur éventuelle des tiges des bulbes précédents, de poursuivre l'enroulement en hélice d'au moins un lien et ainsi de suite jusqu'à l'extrémité de l'épi où on fixe le lien de manière à éviter son déroulement accidentel.

L'invention se rapporte également aux moyens en vue de la mise en oeuvre de ce procédé de mise en grappe 1 des bulbes 2.

Au delà du support 4 et du lien 5, ces moyens comprennent principalement un dispositif 10 d'enroulement en hélice du lien 5 autour de l'ensemble E précité.

Ce dispositif comprend :
- une table 11 sensiblement horizontale,
- un moyen 16 de déplacement en translation de l'épi en formation dans le plan de ta table, au long de l'axe longitudinal 15 de la dite table 11,
- au moins un moyen 19 de commande du moyen 16 de déplacement en translation,
- à la partie antérieure de la table, un support 20 d'au moins un distributeur 21 du lien 5,
- un moyen 22 de guidage de ce support 20 de distributeur 21 en rotation sensiblement autour de l'axe longitudinal 15 de la table 11,
- un moyen 23 de commande en rotation de ce support de distributeur,
- un moyen 24 de synchronisation des actions du moyen 23 de commande en rotation du support 20 de distributeur 21 et du moyen 19 de commande en translation de l'épi en formation afin que le lien soit déposé au moins sensiblement en hélice.

Ces divers éléments sont montés dans un bâti 25.

Le moyen 16 de déplacement en translation peut par exemple être constitué par un tapis sans fin qui, par adhérence de sa face apparente contre l'épi en formation voire des épis préalablement formés et encore reliés au premier, entraîne l'épi 1 en formation au long de l'axe longitudinal 15 de la table 11.

Dans une autre forme de réalisation, le moyen 16 de déplacement en translation comprend des organes de préhension portés par au moins un lien sans fin tel une chaîne dont au moins un tronçon du parcours s'étend sensiblement au long de l'axe longitudinal 15, les dits organes de préhension ayant des formes coopérant avec celles de l'épi.

Ces organes de préhension consistent par exemple en des pinces manoeuvrées en fermeture par des moyens de commande agissant sur celles des dites pinces qui sont situées sur le tronçon du parcours qui est situé au long de l'axe longitudinal 15 pour venir s'insérer entre les bulbes et saisir les tiges.

Les moyens de commande des pinces consistent par exemple en des cames.

Dans une autre forme réalisation :
- ta table est au moins sur une partie de sa longueur a compter du support scindée en deux demi-tables rectangulaires 12, 13 séparées par une rainure longitudinale 14,
- le moyen 16 de déplacement en translation consiste en un coulisseau 16 guidé en translation le long de l'axe longitudinal 15 et portant au dessus de la table une griffe 17 apte à saisir au moins un bulbe et à le faire avancer malgré une traction exercée sur sa tige 3,
- au dessous de la table 11, par un moyen 18 de liaison, le coulisseau 16 est associé au moyen 19 de commande de sa translation.

La rainure 14 scindant en deux demi-tables 12, 13 la table 11 a de préférence une longueur au moins égale à celle du plus grand épi 1 à réaliser et ce afin d'éviter d'avoir à dégager l'épi 1 en formation de la griffe 17 pour assurer la prise sur des bulbes 2 situés à une certaine distance de ceux situés à la base 6 du support 4.

La dite rainure 14 a avantageusement une largeur inférieure à celle du support longiligne 4 des tiges 3 afin d'éviter que le dit support 4 et les tiges s'engagent dans la rainure et/ou au dessous de la table 11.

Le coulisseau 16 coopère avec une coulisse 26 par exemple formée de deux tiges de guidage 27, 28, parallèles à l'axe longitudinal, portées par le bâti 25 et engagées chacune dans l'un des alésages 29, 30 prévus à cet effet dans le coulisseau 16.

Le moyen 18 de liaison en translation comprend un support de griffe 31 associé au coulisseau 16 par un moyen 32 et auquel support 31 sont associés, d'une part, la dite griffe 17 et, d'autre part, un des organes 33, 34 entrant dans la réalisation des moyens 19 de commande en translation de la griffe.

De préférence, le moyen 32 d'association du support de griffe 17 au coulisseau 16 est un tourillon 32 d'axe orthogonal à l'axe longitudinal 15 de la rainure 14 et tant la griffe 17 que l'organe 33 sont associés au support 31 de la griffe à une certaine distance de l'axe du tourillon 32 de sorte que la griffe 17 et l'organe 33 peuvent osciller autour de l'axe de ce tourillon entre deux positions dans l'une desquelles la griffe est en position normale par rapport à la table et les organes 33, 34 des moyens de commande en translation sont en position telle qu'ils coopèrent entre eux tandis que dans l'autre position, ces organes sont dégagés l'un de l'autre et la griffe n'est plus entraînée en translation.

Avantageusement, l'organe 33 n'est constitué que par une crémaillère ou une fraction d'écrou qui, lorsque la griffe est en position normale par rapport au dessus de la table, coopère avec une vis mère 34 d'axe parallèle à l'axe longitudinal 15 tandis que, lorsque la griffe est soulevée, le dit organe 33 est dégagé de la vis mère permettant alors au coulisseau de se déplacer librement par exemple pour ramener rapidement la griffe à son point de départ en vue de la réalisation d'un nouvel épi.

En ce qui concerne le support rotatif 20 d'au moins un distributeur de lien, il est avantageusement constitué d'un disque 35 porté à l'avant d'un moyeu 36 guidé en rotation dans un alésage 37 d'axe sensiblement confondu avec l'axe longitudinal de la table et prévu dans une plaque frontale 38 solidaire du bâti 25.

A son extrémité arrière, le moyeu porte un des organes 39, 40, 41, 42 coopérant pour sa commande en rotation, tel une poulie 39 ou roue dentée recevant une courroie 40 ou une chaîne passée sur une autre poulie 41 ou pignon qui est calé sur l'arbre de sortie d' un moteur ou groupe moto-réducteur 42, lequel, directement ou par une transmission, commande la rotation de la vis mère 34 de sorte que la synchronisation des mouvements de rotation et de translation est garantie.

Le distributeur 21 de lien comprend une tige 43 parallèle à l'axe longitudinal et associée au disque 35 du support rotatif et sur laquelle est enfilée une bobine 44 de lien 5.

Afin d'éviter un déroulement intempestif du lien, sur la tige est prévu un organe 45 de freinage de la rotation de la bobine tel un ressort hélicoïdal comprimé entre le disque et la joue arrière de la bobine qui est bloquée en translation sur la tige par une butée démontable 46 prévue à l'extrémité libre de la tige tige.

Ce frein communique une certaine tension au lien.

Afin d'équilibrer cette tension, dans une forme préférée de réalisation, le support rotatif 20 porte deux tiges 43 diamétralement opposées et recevant chacun une bobine 44 freinée de manière semblable.

Dans le même plan que la dite table, un plateau 47 facilitant l'avance des produits constituant l'épi est avantageusement prévu devant le bord antérieur de la table à une distance suffisante pour dégager le passage du lien qui se déroule du distributeur 21 pour s'enrouler autour des tiges et du support longiligne 4.

Afin de guider le support longiligne 4 et les tiges 3, l'entrée de la table et/ou le plateau 47 peuvent présenter au moins une paire de doigts 48 sensiblement écartés l'un de l'autre de la largeur du dit support longiligne.

Un carter 49 recouvre le support rotatif et le distributeur du lien pour éviter que soit heurté par le dit distributeur l'opérateur qui engage le support et les bulbes par une ouverture 50 prévue à cet effet dans la paroi frontale du carter hors de la zone dans laquelle passe le distributeur du lien.

Pour réaliser une grappe de bulbes, au moyen de ce dispositif, on commence par faire coopérer l'extrémité du support longiligne avec le moyen 16 de son déplacement en translation et à poser la suite de ce support sur le dessus de la table et du plateau.

Ensuite, sur l'extrémité du support longiligne :
- on dispose un ou plusieurs bulbes avec leur tige 3 orientée vers l'extrémité libre du support longiligne 4,
- on saisit l'extrémité libre du lien issu de la bobine de lien portée par le disque rotatif, puis
- on l'enroule à cette extrémité autour des tiges et du support longiligne, aprés quoi,
- on commande simultanément la rotation du disque et l'avance du moyen de déplacement en translation de manière à provoquer l'enroulement spiralé du lien autour de l'ensemble des tiges et du support longiligne et ce en éloignant la base de l'épi vers le bord arrière de la table,
- on stoppe cette opération lorsque les tiges et le support longiligne sont enrobés sur la longueur choisie,
- au voisinage du et/ou des bulbes assemblés avec la bande, on dispose de nouveaux bulbes que l'on associe avec le support longiligne en procédant à un nouvel enroulement spiralé avec le lien,
- on recommence cette dernière opération le nombre de fois nécessaire jusqu'à obtention d'une grappe de longueur voulue aprés quoi, on coupe le lien puis on verrouille le dernier enroulement réalisé sur la grappe.

Lorsque la résistance à l'arrachement des tiges des bulbes est faible, on peut prévoir de reporter les efforts d'entraînement en translation de la grappe sur un organe 51 annexe tel un crochet que l'on relie d'une part au moyen de déplacement en translation et d'autre part au premier enroulement spiralé.

Bien entendu, cet organe 51 est extrait de la grappe aprés sa constitution.

## Revendications

1. Procédé de mise en grappe de bulbes de plantes notamment potagères telles les oignons, les aulx, les échalottes, dans laquelle grappe (1), les bulbes (2) sont disposés d'une certaine manière et selon lequel on se munit d'un support longiligne (4) contre lequel on applique, au moins une a la fois, les tiges (3) des bulbes (2) à assembler avant qu'autour de l'ensemble (E) que forment ce support (4) et au moins une tige (3), sur une certaine longueur de chaque tige, on enroule sensiblement hélicoïdalement au moins un lien (5),
ce procédé étant exploité en vue de la réalisation de grappe dite en épi c'est à dire dans laquelle des groupes d'au moins un bulbe sont alignés en un à trois rangs (R1, R2, R3) parallèles entre eux au long duquel épi (1) , les bulbes d'un même rang sont espacés selon un pas (P) sensiblement régulier avec leurs tiges (3) toutes tournées vers une même extrémité de l'épi (1) et situées sensiblement dans le plan de symétrie de la grappe, au long duquel épi, les bulbes sont déposés,
ce procédé étant **caractérisé** en ce que :
- contre la base (6) du support longiligne (4), on applique la base (7) de la tige (3) d'au moins un bulbe (2) en tournant l'extrémité (8) de cette tige vers l'autre extrémité (9) du support (4) ,
- autour de l'ensemble (E1) que forment le support (4) et la base (7) d'au moins une tige (3), on enroule en hélice au moins le lien (5) et sur la longueur d'un pas (P) égal à au moins une longueur de tige (3) comparable à la grosseur du bulbe (2),
- contre la partie revêtue de cet enroulement, on positionne au moins un autre bulbe dont on appuie la base de la tige sur la partie du support suivant immédiatement la partie revêtue du dit enroulement avant, autour du nouvel ensemble (E2) comprenant le support longiligne, la base de l'autre bulbe et la surlongueur éventuelle des bulbes précédents, de poursuivre l'enroulement en hélice d'au moins un lien et ainsi de suite jusqu'à l'extrémité de l'épi où on fixe le lien de manière à éviter son déroulement accidentel, le mouvement de translation nécessaire à l'obtenation de l'enroulement en hélice étant réalisé par une translation du support longiligne (4).

2. Moyens en vue de la mise en oeuvre du procédé selon la revendication 1 et comprenant :
- une table (11) sensiblement horizontale,
- un moyen (16) de déplacement en translation de l'épi en formation dans le plan de la table, au long de l'axe longitudinal (15) de la dite table (11), lequel moyen (16) consiste en un coulisseau (16) guidé en translation le long de l'axe longitudinal (15) et portant au dessus de la table une griffe (17) apte à saisir au moins un bulbe et à le faire avancer malgré une traction exercée sur sa tige (3),
- au moins un moyen (19) de commande par un moyen de liaison (18) du moyen (16) de déplacement en translation de l'épi,
- à la partie antérieure de la table, un support (20) d'au moins un distributeur (21) du lien (5),
- un moyen (22) de guidage de ce support (20) de distributeur (21) en rotation sensiblement autour de l'axe longitudinal (15) de la table (11),
- un moyen (23) de commande en rotation de ce support de distributeur,
- un moyen (24) de synchronisation des actions du moyen (23) de commande en rotation du support (20) de distributeur (21) et du moyen (19) de commande en translation de l'épi en formation afin que le lien soit déposé au moins sensiblement en hélice,
ces moyens étant **caractérisés** en ce que :
- le moyen (18) de liaison en translation comprend un support de griffe (31) associé au coulisseau (16) par un moyen (32) et auquel support (31) sont associés, d'une part, la dite griffe (17) et, d'autre part, un des organes (33, 34) entrant dans la réalisation des moyens (19) de commande en translation de la griffe, et
- le moyen (32) d'association du support de griffe (17) au coulisseau (16) est un tourillon (32) d'axe orthogonal à l'axe longitudinal (15) d'une rainure (14) formée dans la table (11) et tant la griffe (17) que l'organe (33) sont associés au support (31) de la griffe à une certaine distance de l'axe du tourillon (32) de sorte que la griffe (17) et l'organe (33) peuvent osciller autour de l'axe de ce tourillon entre deux positions dans l'une desquelles la griffe est en position normale par rapport à la table et les organes (33, 34) des moyens de commande en translation sont en position telle qu'ils coopèrent entre eux tandis que dans l'autre position, ces organes sont dégagés l'un de l'autre et la griffe n'est plus entraînée en translation.

3. Moyens selon la revendication 2 **caractérisés** en ce que l'organe (33) est constitué par une fraction d'écrou qui, lorsque la griffe est en position normale par rapport au dessus de la table, coopère avec une vis mère (34) d'axe parallèle à l'axe longitudinal (15) tandis que, lorsque la griffe est soulevée, le dit organe (33) est dégagé de la vis mère permettant alors au coulisseau de se déplacer librement.

## Claims

1. A process for joining together plant bulbs into a bunch, the plants being in particular vegetables such as onions, garlic and shallots, in which bunch (1) the bulbs (2) are arranged in a certain manner, and in which process a long support (4) is used, against which the stems (3) of the bulbs (2) for assembly are applied at least one at a time, and subsequently at least one tie (5) is wound around the assembly (E) formed by the said support (4) and at least one stem (3), over a certain length of each stem and in a substantially helical manner,
the said process being used with the aim of providing a bunch said to be a cluster, i.e. wherein groups of at least one bulb are aligned in one to three rows (R1, R2, R3) which are parallel along the length of the said cluster (1), those bulbs in the same row being spaced at a substantially regular distance (P) apart, with their stems (3) all turned towards the same end of the cluster (1) and positioned substantially within the plane of symmetry of the bunch, the bulbs being deposited along the length of the said cluster, the process being **characterised in that**:
- the bottom (7) of the stem (3) of at least one bulb (2) is placed against the base (6) of the long support (4), the end (8) of the said stem being turned towards the other end (9) of the support (4);
- at least the tie (5) is wound helically around the assembly (E1) formed by the support (4) and the bottom (7) of at least one stem (3), over the length of a separating distance (P) equal to the length of at least one stem (3), the said length being comparable to the size of the bulb (2);
- at least one other bulb is placed against the portion covered by the winding, the bottom of the stem of the bulb being pressed against the portion of the support immediately after the portion covered by the said winding, and subsequently helical winding continues of at least one tie about the new assembly (E2) comprising the long support, the base of the other bulb and any excess length of preceding bulbs, and so forth as far as the end of the cluster, where the tie is secured in such a manner as to avoid accidental unwinding thereof, the translational motion necessary to obtain the helical winding being achieved by translational displacement of the long support (4).

2. Means for carrying out the process in accordance with claim 1, comprising:
- a substantially horizontal table (11);
- means (16) for translational displacement of the cluster being formed within the plane of the table (11) and along the longitudinal axis (15) thereof, the said means (16) comprising a slide (16) guided in translational motion along the longitudinal axis (15), and supporting above the table a gripper (17) capable of grasping at least one bulb and moving it forwards despite the traction exerted on the stem (3) thereof;
- at least one means (19) for control via connecting means (18) of the means (16) for translational displacement of the cluster;
- a support (20) at the front portion of the table, for at least one feeder (21) of the tie (5);
- means (22) for rotational guiding of the said support (20) for the feeder (21) substantially about the longitudinal axis (15) of the table (11);
- means (23) to control the rotation of the said feeder support;
- means (24) to synchronise the action of the means (23) for rotational control of the support (20) of the feeder (21) with the action of the means (19) for control of the translational motion of the cluster being formed, in order for the tie to be deposited in a substantially helical manner;
the means being **characterised in that**
- the means (18) for connection during translational motion comprises a support (31) for the gripper, associated with the slide (16) via means (32), the said gripper (17) being associated with the said support (31) and one of the members (33, 34) also being associated therewith and forming part of the means (19) for controlling the translational motion of the gripper, and
- the means (32) for association of the support for the gripper (17) with the slide (16) is a journal (32) with an axis at right angles to the longitudinal axis (15) of a groove (14) formed in the table (11), and both the gripper (17) and the member (33) are associated with the .support (31) for the gripper at a certain distance from the axis of the journal (32) in such a manner that the gripper (17) and the member (33) can swing about the axis of the said journal between two positions, in one of which the gripper is in its standard position in relation to the table, and the members (33, 34) of the means for translational control are in a position such that they co-operate, whilst in the other position the said members are freed from one another and the gripper is no longer driven in translational motion.

3. Means in accordance with claim 2, **characterised in that** the member (33) is formed by a part of a nut which, when the gripper is in its standard position in relation to the top of the table, co-operates with a leading screw (34) with an axis parallel to the longitudinal axis (15), and, in contrast, when the gripper is raised, the said member (33) is freed from the leading screw, thus allowing the slide to be displaced freely.

## Patentansprüche

**1.** Verfahren zum Zusammenbinden von Pflanzenzwiebeln, insbesondere Zwiebeln von Gemüsepflanzen wie Speisezwiebeln, Knoblauchzwiebeln, Schalotten, bei welchem die Zwiebeln (2) im Gebinde (1) in einer bestimmten Weise angeordnet werden und ein langgestreckter Träger (4) verwendet wird, gegen welchen die Pflanzenstiele (3) der einzubindenden Zwiebeln (2) zumindest jeweils einzeln angelegt werden, ehe um den Verbund (E), der von diesem Träger (4) und mindestens einem Pflanzenstiel (3) gebildet wird, über eine bestimmte Länge jedes Stiels mindestens ein Bindeband (5) im wesentlichen spiralförmig gewickelt wird,
wobei dieses Verfahren zur Bildung eines als kolbenförmig bzw. zopfförmig bezeichneten Gebindes, bei dem Gruppen von je mindestens einer Zwiebel in einer von drei zueinander parallelen Reihen (R1, R2, R3) entlang des Gebindes (1) ausgerichtet sind, wobei die Zwiebeln in derselben Reihe in im wesentlichen regelmäßigen Schritten (P) voneinander beabstandet sind und ihre Stiele (3) dabei demselben Ende des Gebindes (1) zugewendet sind und im wesentlichen in der Symmetrieebene des Gebindes liegen, entlang welchem die Zwiebeln aufgelegt sind,
**dadurch gekennzeichnet**, daß :
- gegen die Basis (5) des langgestreckten Trägers (4) die Unterseite (7) des Stiels (3) mindestens einer Zwiebel (2) aufgelegt wird, indem das Ende (8) dieses Stiels zum anderen Ende (9) des Trägers (4) hin gedreht wird,
- um den vom Träger (4) und der Unterseite (7) mindestens eines Stiels (3) gebildeten Verbund (E1) spiralig und über die Länge eines Schritts (P), die mindestens gleich der der Dicke der Zwiebel (2) vergleichbaren Länge des Stiels (3) ist, zumindest das Bindeband (5) gewickelt wird,
- daß gegen den von diesem Wickelgang überdeckten Abschnitt mindestens eine weitere Zwiebel positioniert wird, deren Stielunterseite auf den unmittelbar an den vom vorhergehenden Wickelgang überdeckten Abschnitt anschließenden Abschnitt des Trägers um den aus dem langgestreckten Träger, der Unterseite der weiteren Zwiebel und der eventuellen Überlänge der vorhergehenden Zwiebeln bestehenden neuen Verbund (E2) so aufgelegt wird, daß der spiralige Wickel des mindestens einen Bindebandes fortgeführt wird, und so fort bis zum Ende des Gebindes, wo das Bindeband so fixiert wird, daµ ein unbeabsichtigtes Abwickeln verhindert wird,
wobei die zur Bildung des spiraligen Wickels erforderliche Verschiebung durch Verschiebung des langgestreckten Trägers (4) erfolgt.
Vorrichtung zur Durchführung des Verfahrens nach Anspruch 1, welches folgendes aufweist:
einen im wesentlichen horizontalen Tisch (11),
eine Einrichtung (16) zur translatorischen Verschiebung des Gebindes während dessen Bildung auf der Tischebene, entlang der Längsachse (15) des Tisches (11), welche aus einem translatorisch entlang der Längsachse (15) geführten Gleitstück (16) besteht und über dem Tisch einen Greifer (17) trägt, welcher mindestens eine Zwiebel erfassen und trotz einer auf den Stiel (3) ausgeübten Zugwirkung diese vorschieben kann,
mindestens eine Einrichtung (19) zur Steuerung der Einrichtung (16) zur translatorischen Verschiebung des Gebindes über eine Verbindungseinrichtung (18),
- einen Träger (20) im vorderen Abschnitt des Tisches für mindestens ein Bandabgabemittel (21) für das Bindeband (5),
- eine Einrichtung (22) zum Führen dieses Trägers (20) des Bandabgabemittels (21) in einer Drehbewegung im wesentlichen um die Längsachse (15) des Tisches (11),
- eine Einrichtung (23) zur Steuerung der Drehbewegung dieses Trägers für das Bandabgabemittel,
- eine Einrichtung (24) zum Synchronisieren der Bewegungen der Einrichtung (23) zur Steuerung der Drehbewegung des Trägers (20) für das Bandabgabemittel (21) und der Einrichtung (19) zum Steuern der Verschiebebewegung des Gebindes während dessen Bildung in der Weise, daß das Bindeband zumindest im wesentlichen spiralig aufgelegt wird,
**dadurch gekennzeichnet**, daß:
- die Verbindungseinrichtung (18) für die Verschiebung einen dem Gleitstück (16) über ein Mittel (32) zugeordneten Greiferträger (31) umfaßt, welchem einerseits der Greifer (17) und andererseits eines der Elemente (33, 34) zugeordnet sind, welche bei der Ausbildung der Einrichtung (19) zum Steuern der Verschiebebewegung des Greifers in Eingriff kommen, und
- die Einrichtung (32), mit welcher der Träger für den Greifer (17) dem Gleitstück (16) zugeordnet ist, ein Drehzapfen (32) ist, dessen Achse senkrecht zur Längsachse (15) einer im Tisch (11) ausgebildeten Nut (14) steht, und so der Greifer (17) wie auch das Element (33) dem Träger (31) für den Greifer in einem gewissen Abstand von der Achse des Drehzapfens (32) so zugeordnet sind, daß der Greifer (17) und das Element (33) um die Achse dieses Drehzapfens zwischen zwei Positionen verschwenkbar sind, wobei in der einen Position der Greifer sich bezüglich des Tisches in seiner Normalstellung befindet, und die Elemente (33, 34) der Einrichtung zum Steuern der Verschiebebewegung so positioniert sind, daß sie miteinander zusammenwirken, während diese Elemente in der anderen Position außer Eingriff voneinander stehen und der Verschiebungsantrieb des Greifers nicht mehr wirksam ist.

**3.** Vorrichtung nach Anspruch 2, **dadurch gekennzeichnet**, daß das Element (33) aus einer Teilmutter besteht, die bei Normalstellung des Greifers bezüglich der Tischoberseite mit einer Leitspindel (34) zusammenwirkt, deren Achse parallel zur Längsachse (15) verläuft, während bei abgehobenem Greifer das Element (33) außer Eingriff mit der Leitspindel steht und so eine ungehinderte Verschiebung des Gleitstücks gestattet.
